# EUROPÄISCHE PATENTSCHRIFT

(11) **EP 2 092 208 B1**
(45) Veröffentlichungstag und Bekanntmachung des Hinweises auf die Patenterteilung: **11.01.2012**
(21) Anmeldenummer: 07822428.4
(22) Anmeldetag: 09.11.2007
(51) Int. Cl.: F16F 1/38

(54) **RUNDLAGER**
ROUND BEARING
PALIER CIRCULAIRE

(30) Priorität: 16.11.2006 EP 06124214
(43) Veröffentlichungstag der Anmeldung: 26.08.2009
(73) Patentinhaber: BASF SE, 67056 Ludwigshafen (DE)
(72) Erfinder: WULF, Andreas, 49406 Barnstorf (DE); NIESTRAT, Falk Sören, 32130 Enger (DE); HORSTMANN, Andreas, 27232 Sulingen (DE)
(86) Internationale Anmeldenummer: PCT/EP2007/062139
(87) Internationale Veröffentlichungsnummer: WO 2008/058912

(56) Entgegenhaltungen:
- WO-A-92/13205
- WO-A-97/03307
- DE-A1- 10 225 797
- JP-A- 5 141 462
- JP-A- 9 257 072
- JP-A- 2005 220 956
- Wolters/Bittner/Laak, Kaufmann: "Das Metallkleben", 1 January 1991 (1991-01-01), Technologie-Transferstelle Handwerk NRW, Germany

## Beschreibung

Die Erfindung betrifft Verfahren zur Herstellung von bevorzugt zylindrischen Lagern, bevorzugt Rundlagern enthaltend (i) bevorzugt zylindrische Außenbuchse, (ii) bevorzugt zylindrisches bevorzugt elastisches Lagerelement auf der Basis von zelligen Polyisocyanat-Polyadditionsprodukten und (iii) hohle bevorzugt zylindrische Innenbuchse, wobei man die Außenbuchse mittels Spritzguss von thermoplastischem Kunststoff, der bevorzugt glasfaserverstärkt ist, bevorzugt thermoplastischem Polyurethan, besonders bevorzugt glasfaserverstärktem thermoplastischem Polyurethan, haftend mit dem Lagerelement verbindet. Des Weiteren bezieht sich die Erfindung auf derart erhältliche Lager sowie Automobile oder Lastkraftwagen enthaltend die erfindungsgemäßen Rundlager.

Rundlager werden in Automobilen innerhalb des Fahrwerks verwendet und sind allgemein bekannt. Mit Hilfe von Rundlagern werden im Automobil Aggregate, Fahrwerksbauteile u. a. untereinander oder mit der Karosserie verbunden. Dabei erfüllen sie durch die Verwendung von Elastomerwerkstoffen die Funktion der elastischen Lagerung; andererseits sind sie auf Grund ihrer viskosen Eigenschaften in der Lage, Energie zu dissipieren und damit Schwingungen zu dämpfen. Dabei wird ein hohes Maß an Dämpfung besonders für die Bedämpfung großer Amplituden von niederfrequenten Schwingungen benötigt, die z. B. die Anbindung der Stossdämpfers an die Karosserie beeinflussen. Andererseits ist bei kleinen Amplituden und höheren Frequenzen eine hohe Dämpfung aus Gründen der Fahrzeugakustik unerwünscht. Das Dämpfungsverhalten derzeitiger, konventioneller Rundlager ist abhängig vom intrinsischen Dämpfungsvermögen des eingesetzten Elastomerwerkstoffes. Derartige Rundlager sind beschrieben in WO 03/104677, WO 03/104345, WO 03/104326 und WO 03/104676 (DE-A-10225797).

Besondere Anforderungen bestehen weiterhin in der Entwicklung eines möglichst wirtschaftlichen Herstellverfahrens, das es ermöglicht, sicher, flexibel und schnell eine möglichst breite Vielfalt unterschiedlicher Rundlager zu fertigen.

Aufgabe der vorliegenden Erfindung war es somit, ein Verfahren zur Herstellung von bevorzugt zylindrischen Lagern, bevorzugt Rundlagern, enthaltend (i) bevorzugt zylindrische Außenbuchse, (ii) bevorzugt zylindrisches bevorzugt elastisches Lagerelement auf der Basis von zelligen Polyisocyanat-Polyadditionsprodukten und (iii) hohle bevorzugt zylindrische Innenbuchse zu entwickeln, mit die genannten Probleme und Anforderungen gelöst werden. Insbesondere sollte das Verfahren geeignet sein, losgelöst von der Herstellung des Lagerelementes, Rundlager auf der Basis einer differentiellen Bauweise herzustellen.

Diese Aufgaben konnten dadurch gelöst werden, dass man die Außenbuchse mittels Spritzguss von thermoplastischem Kunststoff, der bevorzugt glasfaserverstärkt ist, bevorzugt thermoplastischem Polyurethan, besonders bevorzugt glasfaserverstärktem thermoplastischem Polyurethan, haftend mit dem Lagerelement verbindet.

Die vorliegende Erfindung zeichnet sich dadurch aus, dass die Außenbuchse mittels Spritzguss hergestellt wird. Dies bietet den Vorteil, dass für die Außenbuchse eine große Gestaltungsfreiheit besteht, dass weitere Funktionswerkstoffe mittels Zwei-Komponentenspritzguß quasi in einem Schuss hinzugefügt werden können und dass keine Haftvermittler wie für die Verwendung metallener Außenbuchsenwerkstoffen verwendet werden müssen. Weiterhin ist durch die differentielle Bauweise eine Qualitätssicherung im frühen Stadium des Montageprozesses möglich.

Das erfindungsgemäße Verfahren erfolgt bevorzugt derart, dass man das Lagerelement (ii) in Kontakt mit der Innenbuchse herstellt, bevorzugt verschäumt und haftend verbindet und anschließend die Außenbuchse (i) in der Form einer Spritzgussapparatur mittels Spritzguss herstellt. Alternativ ist es in einer weiteren bevorzugten Ausführungsform möglich, dass man die Innenbuchse (iii) in dem Lagerelement (ii) platziert und haftend verbindet, bevorzugt verklebt, und anschließend die Außenbuchse (i) in der Form einer Spritzgussapparatur mittels Spritzguss herstellt.

Die Außenbuchse wird mittels Spritzguss in Kontakt mit dem Lagerelement in einer geeigneten Spritzgussapparatur hergestellt. Das Spritzgießen von thermoplastischen Kunststoffen und geeignete Apparate hierfür sind allgemein bekannt und im Handel erhältlich. Als thermoplastische Kunststoffe kommen für die Außenbuchse Polyamid, POM, PP, PEEK, PSU, PI u. a. in Betracht, die jeweils allgemein bekannt und kommerziell erhältlich sind. Bevorzugt werden erfindungsgemäß thermoplastische Polyurethane, besonders bevorzugt glasfaserverstärkte thermoplastische Polyurethane mittels Spritzguss zur Außenbuchse verarbeitet. Derartige glasfaserverstärkte thermoplastische Polyurethane sind allgemein bekannt. Die thermoplastischen Polyurethane werden an späterer Stelle ausführlich dargestellt.

Die Temperatur beim Spritzgießen von thermoplastischem Polyurethan beträgt dabei bevorzugt zwischen 140 und 250 °C, besonders bevorzugt zwischen 160 und 230 °C. TPU werden bevorzugt möglichst schonend verarbeitet. Die Temperaturen können je nach Härte angepasst werden. Die Umfangsgeschwindigkeit beim Plastifizieren liegt bevorzugt kleiner oder gleich 0,2 m/s, der Staudruck beträgt bevorzugt zwischen 15 bis 200 bar. Die Einspritzgeschwindigkeit ist bevorzugt möglichst gering um Scherbeanspruchung gering zu halten. Die Kühlzeit ist bevorzugt ausreichend lang zu wählen, wobei der Nachdruck bevorzugt 30 zwischen 80 % des Einspritzdruckes beträgt. Die Formen werden bevorzugt auf zwischen 30 und 70 °C temperiert. Der Anguss wird bevorzugt an der stärksten Stelle des Bauteils gewählt. Bei flächigen Überspritzungen kann eine Anspritzpunkte-Kaskade eingesetzt werden.

Bevorzugt ist die Außenbuchse haftend mit dem Lagerelement (ii) verbunden. Diese Haftung kann durch eine Plasma- oder mechanische Behandlung der Oberfläche des Lagerelementes (ii), an die die Außenbuchse angespritzt wird, verbessert werden. Bevorzugt sind deshalb auch Verfahren, bei denen man die Oberfläche des Lagerelementes (ii) plasmabehandelt und anschließend den thermoplastischen Kunststoff der Außenbuchse (i) an die plasmabehandelte Oberfläche des Lagerelementes anspritzt.

Die Plasmabehandlung ist allgemein bekannt und beispielsweise in den eingangs zitierten Schriften dargestellt. Apparaturen zur Plasmabehandlung sind beispielsweise bei Plasmatreat GmbH, Bisamweg 10, 33803 Steinhagen erhältlich.

Bevorzugt wird man in einer Plasmaquelle mittels Hochspannungsentladung ein Plasma erzeugen, dieses Plasma mittels einer Plasmadüse mit der Oberfläche des Lagerelementes (ii) in Kontakt bringen und die Plasmaquelle in einem Abstand zwischen 2 mm und 25 mm mit einer Geschwindigkeit zwischen 0,1 m/min und 400 m/min, bevorzugt zwischen 0,1 m/min und 200 m/min, besonders bevorzugt zwischen 0,2 m/min und 50 m/min relativ zur Oberfläche der Komponente bewegen, die plasmabehandelt wird. Das Plasma wird man bevorzugt durch eine Gasströmung entlang der Entladungsstrecke auf die Oberfläche transportieren. Als aktivierte Teilchen des Plasmas, die die Oberfläche des Kunststoffs zur Haftung vorbereiten, sind insbesondere Ionen, Elektronen, Radikale und Photonen zu nennen. Die Plasmabehandlung dauert bevorzugt zwischen 1 ms und 100 s. Als Gase können Sauerstoff, Stickstoff, Kohlendioxid und Gemische aus den vorgenannten Gasen, bevorzugt Luft, insbesondere Druckluft eingesetzt werden. Der Gasfluss kann bis 2 m³/h pro Düse betragen. Die Arbeitsfrequenz kann zwischen 10 und 30 kHz betragen. Die Anregungsspannung bzw. die Elektrodenspannung kann zwischen 5 und 10 kV betragen. Es kommen stehende oder rotierende Plasmadüsen in Betracht. Die Oberflächentemperatur des Bauteils kann zwischen 5 °C und 250 °C, bevorzugt zwischen 5 °C und 200 °C betragen.

Alternativ und ebenfalls bevorzugt ist es möglich, die Oberfläche des Lagerelementes (ii) mechanisch vorzubehandeln, besonders bevorzugt wird man somit die Oberfläche des Lagerelementes (ii) mechanisch vorbehandeln und anschließend den thermoplastischen Kunststoff der Außenbuchse (i) an die vorbehandelte Oberfläche des Lagerelementes anspritzen.

Zusätzlich zum Lagerelement (ii) kann in dem erfindungsgemäßen Lager mindestens ein weiteres Lager zwischen Innenbuchse und Außenbuchse vorliegen. Bei diesem zusätzlichen Lager (vi) handelt es sich bevorzugt um ein elastisches Material. Das zusätzliche Lager dient als zusätzlicher Funktionswerkstoff dazu, die Steifigkeit des Lagers in unterschiedliche radiale Richtungen gezielt einzustellen. Aus diesem Grund kommt das zusätzliche Lager bevorzugt nicht über den gesamten Umfang des Lagers zum Einsatz. Bevorzugt weist das Lagerelement (iv) eine andere Federcharakteristik als das Lagerelement (ii) auf. Dies kann dadurch erreicht werden, das ein grundsätzlich unterschiedliches Material eingesetzt wird oder aber die beispielsweise die Dichte im Vergleich zum anderen Lagerelement (ii) variiert wird. Bevorzugt ist das Lagerelement (ii) haftend mit mindestens einem, besonders bevorzugt zwei weiteren elastischen Lagerelement (iv) verbunden. Bevorzugt ist das Lagerelement (iv) zwischen der Außenbuchse (i) und dem Lagerelement (ii) platziert. Das Lagerelement (iv) reicht axial bevorzugt über die gesamte Länge des Lagerelementes (ii). Bevorzugt wird das Lagerelement (ii) von dem Lagerelement (iv) dabei nicht vollständig umfasst.

Alternativ kann das Lagerelement (iv) zwischen der Innenbuchse (iii) und dem Lagerelement (ii) platziert sein, axial über die gesamte Länge des Lagerelementes (ii) reichen und die Innenbuchse (iii) nicht vollständig umfassen. Besonders bevorzugt ist das Lagerelement (iv) in mindestens einer, bevorzugt zwei Nut(en), die sich bevorzugt gegenüberliegen, des Lagerelementes (ii) angeordnet.

Das Lagerelement (iv) kann man bevorzugt mittels Spritzguss in Kontakt mit dem Lagerelement (ii) herstellen. Besonders bevorzugt wird man dabei thermoplastisches Polyurethan einsetzen, bevorzugt mit einer Härte zwischen 50 und 70 Shore A. Die Herstellung der besonders bevorzugten zusätzlichen elastischen Lagerelemente (iv) mittels Spritzguss weist den Vorteil auf, dass die Herstellung dieser zusätzlichen Lagerelemente (iv) und anschließend der Außenbuchse in einem Werkzeug im üblichen Zweikomponentenspritzguss erfolgen kann. Besonders bevorzugt ist somit der Zweikomponentenspritzguss, wobei man im Zweikomponentenspritzguss bevorzugt in einem einzigen Spritzgusswerkzeug in einem ersten Schritt mit thermoplastischen Polyurethan als zusätzliches Lagerelement (iv) sowie dem Lagerelement (ii) einen ersten Formkörper enthaltend bevorzugt Innenbuchse, Lagerelement (ii) und Lagerelement (iv) herstellt, anschließend bevorzugt die Oberfläche dieses ersten Spritzkörpers plasmabehandelt und danach thermoplastisches Polyurethan zur Herstellung der Außenbuchse mittels Spritzguss auf die plasmabehandelte Oberfläche des ersten Spritzkörpers aufträgt, bevorzugt anspritzt. Spritzgießen ebenso das Mehrkomkonentenspritzgießen im Direktverfahren sowie auch im Einlegeverfahren, bei dem ein Artikel in ein Spritzgusswerkzeug eingelegt wird, ist allgemein bekannt.

Alternativ kann man das Lagerelement (iv) als Giesselastomer in Kontakt mit dem Lagerelement (ii) herstellen. Als Giesselastomer kommen dabei insbesondere allgemein bekannt Polyurethangiesselastomere in Betracht, die kommerziell erhältlich sind. Diese Giesselastomere weisen bevorzugt eine Härte zwischen 50 und 70 Shore A auf. Anschließend, nach Aushärten des Gießelastomers, kann man mittels Spritzguss die Außenbuchse herstellen.

Die Außenbuchse weist bevorzugt eine Dicke zwischen 1 mm und 10 mm auf.

Die Innenbuchse (iii) kann auf üblichen Materialien basieren, beispielsweise Metallen, z. B. Stahl, Eisen und/oder Aluminium oder harten Kunststoffen, z. B. TPU. Die Innenbuchse (iii) verfügt über eine Innenbohrung üblicherweise zur Aufnahme eines Befestigungsbolzen. Der Außendurchmesser ergibt sich aus Festigkeitsgründen. Bevorzugt basiert die Innenbuchse auf Metall.

Das Lagerelement (ii) sowie gegebenenfalls (iv) sind zwischen Innenbuchse (iii) und Außenbuchse (i) angeordnet. Bevorzugt sind die Einzelelemente Außenbuchse, Lagerelement und Innenbuchse haftend miteinander verbunden.

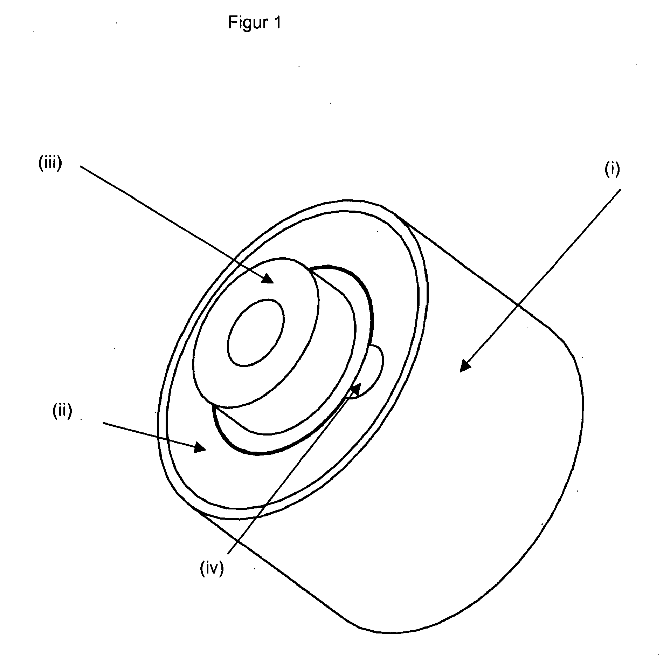

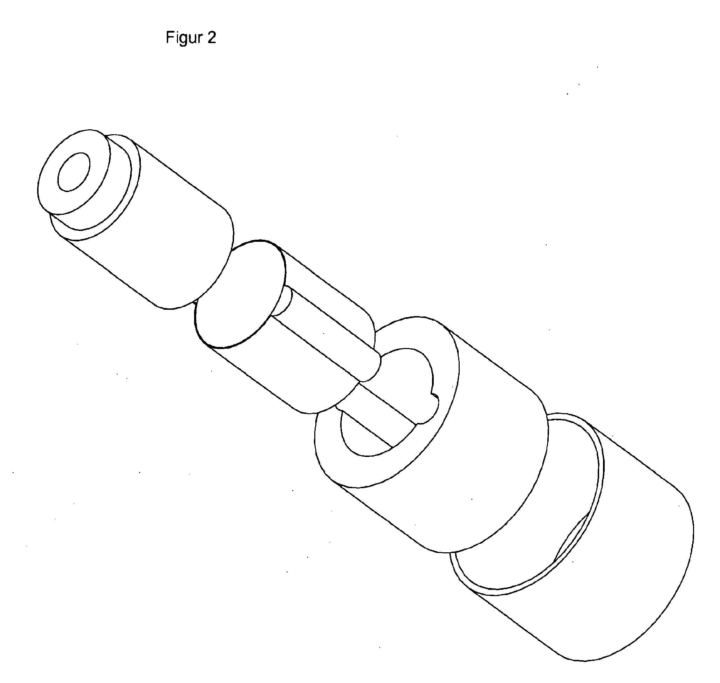

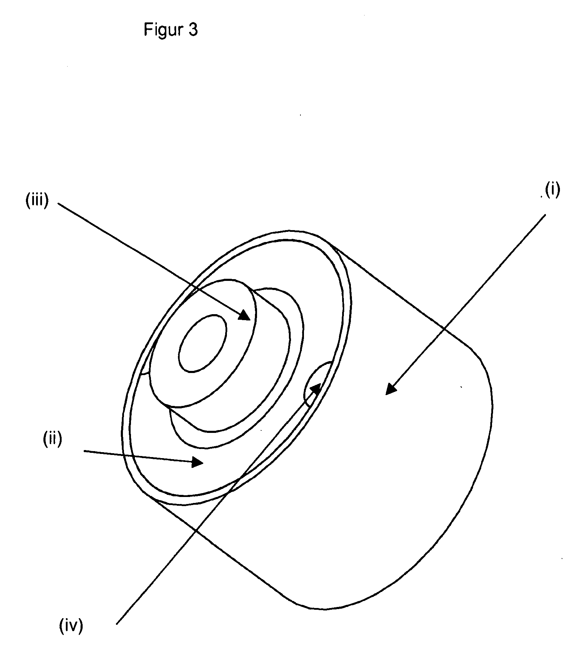

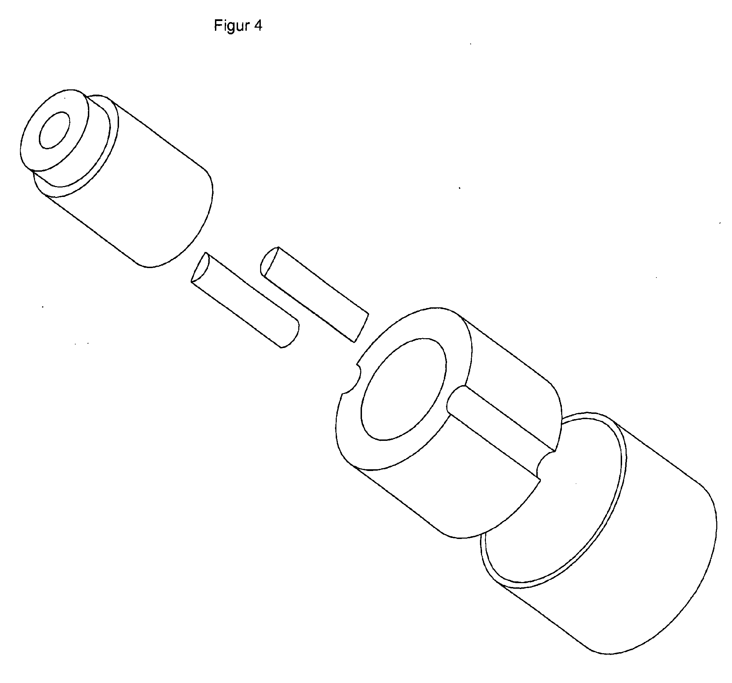

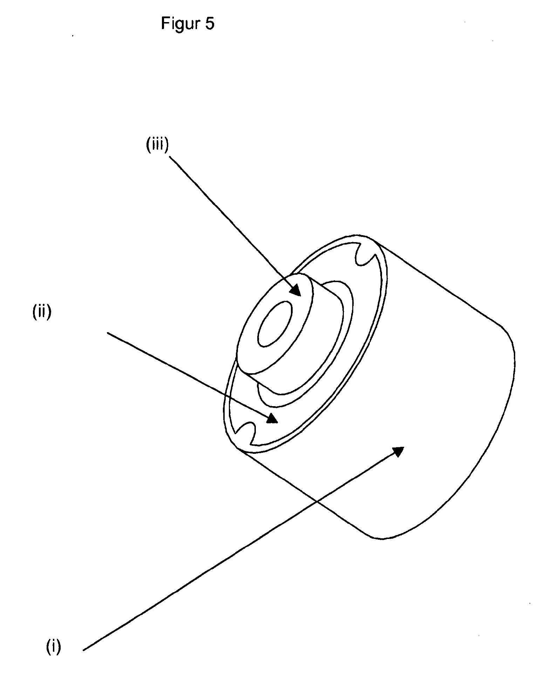

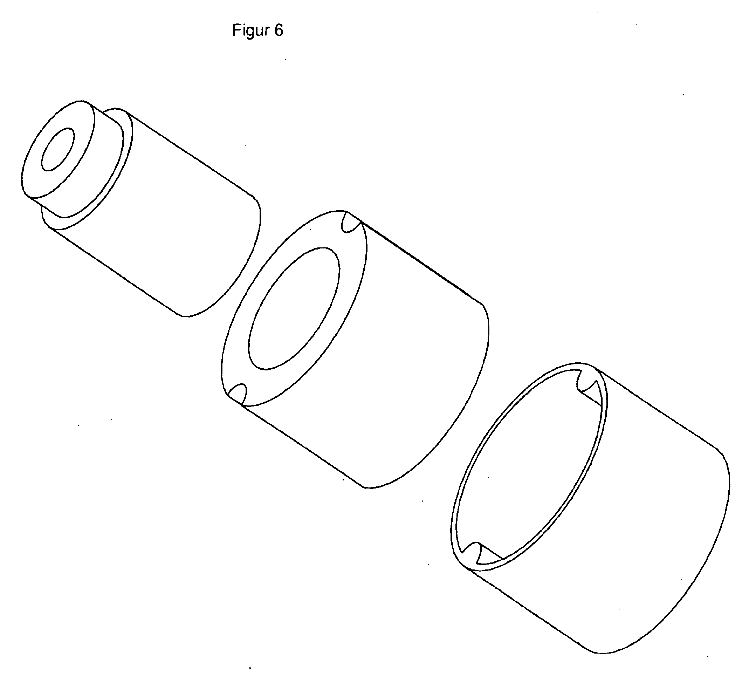

Ein erfindungsgemäßes Rundlager ist in den Figuren 1 bis 6 dargestellt. Dabei ist die Außenbuchse mit (i), die Innenbuchse mit (iii) sowie die Lagerelemente mit (ii) und (iv) gekennzeichnet. Zur besseren Übersicht ist das Rundlager teilweise in den Einzelteilen, d. h. demontiert, dargestellt.

Das erfindungsgemäße Lagerelement (ii) basiert bevorzugt auf Polyisocyanat-Polyadditionsprodukten, beispielsweise Polyurethanen und/oder Polyharnstoffen, beispielsweise Polyurethanelastomeren, die gegebenenfalls Harnstoffstrukturen enthalten können, bevorzugt zelligen Polyurethanelastomeren, bevorzugt mit einer Dichte nach DIN EN ISO 845 zwischen 200 und 800 kg/m³, bevorzugt zwischen 300 und 600 kg/m³, einer Zugfestigkeit nach DIN EN ISO 1798 von ≥ 2,0 N/mm², bevorzugt ≥ 2,5 N/mm², besonders bevorzugt zwischen 2,5 bis 8 N/mm², einer Bruchdehnung nach DIN EN ISO 1798 von ≥ 200 %, bevorzugt ≥ 350 % und einer Weiterreißfestigkeit nach DIN ISO 34-1 B, b von ≥ 8 N/mm, bevorzugt 8 bis 25 N/mm. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771. Die Herstellung erfolgt üblicherweise durch Umsetzung von Isocyanaten mit gegenüber Isocyanaten reaktiven Verbindungen. Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten. Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Bevorzugt weisen die zelligen Polyisocyanat-Polyadditionsprodukten einen Druckverformungsrest kleiner 25 % nach DIN 53572, wobei als Prüfkörper Würfel der Abmessung 40 mm x 40 mm x 30 mm ohne Silikonanstrich verwendet werden, die Prüfung bei konstanter Verformung erfolgt, wobei die Prüfkörper um 40 % zusammengedrückt und 22 Stunden bei 80 °C im Umluftschrank gehalten werden, die Prüfeinrichtung nach der Entnahme aus dem Wärmeschrank 2 Stunden im zusammengedrückten Zustand auf Raumtemperatur abgekühlt wird, anschließend der Prüfkörper aus der Prüfeinrichtung entnommen wird und 10 min ± 30 s nach der Entnahme der Prüfkörper aus der Prüfeinrichtung die Höhe der Prüfkörper auf 0,1 mm genau gemessen wird. Das Lagerelement (ii) ist bevorzugt haftend mit der Außenbuchse (i) und/oder der Innenbuchse (iii) verbunden. Unter dem Ausdruck "haftend verbunden" ist insbesondere zu verstehen, dass das Lagerelement (ii) mit der Innenbuchse (iii) beispielsweise mit allgemein üblichen Klebstoffen verklebt oder direkt auf der Innenbuchse (iii) aufgeschäumt ist.

Thermoplastische Polyurethane, in dieser Schrift auch als TPU bezeichnet, und Verfahren zu ihrer Herstellung sind allgemein bekannt. Im allgemeinen werden TPUs durch Umsetzung von (a) Isocyanaten mit (b) gegenüber Isocyanaten reaktiven Verbindungen, üblicherweise mit einem Molekulargewicht (M_{w}) von 500 bis 10000, bevorzugt 500 bis 5000, besonders bevorzugt 800 bis 3000 und (c) Kettenverlängerungsmitteln mit einem Molekulargewicht von 50 bis 499 gegebenenfalls in Gegenwart von (d) Katalysatoren und/oder (e) üblichen Zusatzstoffen hergestellt.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b), (c) sowie gegebenenfalls (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanato-methyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexan-di-isocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4-und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Bevorzugt wird 4,4'-MDI verwendet. Für powder-slush- Anwendungen sind, wie eingangs dargestellt auch aliphatische Isocyanate bevorzugt, besonders bevorzugt 1-Isocyanato-3,3,5-trimethyl-5-isocyanato-methyl-cyclohexan (Isophoron-diisocyanat, IPDI) und/oder Hexamethylendiisocyanat (HDI), insbesondere Hexamethylendiisocyanat. Wie bereits eingangs dargestellt können als Isocyanat (a) auch Prepolymer eingesetzt werden, die frei Isocyanatgruppen aufweisen. Der NCO-Gehalt dieser Prepolymere beträgt bevorzugt zwischen 10 und 25 %. Die Prepolymere können den Vorteil bieten, dass aufgrund der Vorreaktion bei der Herstellung der Prepolymere eine geringere Reaktionszeit bei der Herstellung der TPU benötigt wird.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten zwischen 500 und 8000, bevorzugt 600 bis 6000, insbesondere 800 bis weniger als 3000, und bevorzugt einer mittleren Funktionalität gegenüber Isocyanaten von 1,8 bis 2,3, bevorzugt 1,9 bis 2,2, insbesondere 2. Bevorzugt setzt man Polyetherpolyole ein, beispielsweise solche auf,der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylenglykole. Die Polyetherole weisen den Vorteil auf, dass sie eine höhere Hydrolysestabilität als Polyesterole besitzen. Weiterhin können als Polyetherole sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden zumeist durch Anlagerung von Alkylenoxiden, insbesondere Ethylenoxid, Propylenoxid und Mischungen daraus, an die oben beschriebenen Diole oder Triole in Gegenwart von hochaktiven Katalysatoren hergestellt. Derartige hochaktive Katalysatoren sind beispielsweise Cäsiumhydroxid und Multimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration. Weiterhin können Polybutadiendiole mit einer Molmasse von 500 - 10000 g/mol bevorzugt 1000-5000 g/mol, insbesondere 2000 - 3000 g/mol verwendet werden. TPU's, welche unter der Verwendung dieser Polyole hergestellt wurden, können nach thermoplastischer Verarbeitung strahlenvernetzt werden. Dies führt z. B. zu einem besseren Abbrennverhalten. Statt eines Polyols können auch Mischungen verschiedener Polyole eingesetzt werden.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.
   Besonders bevorzugt handelt es sich bei den Komponenten a) bis c) um difunktionelle Verbindungen, d. h. Diisocyanate (a), difunktionelle Polyole, bevorzugt Polyetherole (b) und difunktionelle Kettenverlängerungsmittel, bevorzugt Diole.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z. B. Eisen-(III)- acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.

Neben Katalysatoren (d) können den Aufbaukomponenten (a) bis (c) auch übliche Hilfsmittel und/oder Zusatzstoffe (e) hinzugefügt werden. Genannt seien beispielsweise oberflächenaktive Substanzen, Keimbildungsmittel, Gleit- und Entformungshilfen, Farbstoffe und Pigmente, Antioxidantien, z. B. gegen Hydrolyse, Licht, Hitze oder Verfärbung, anorganische und/oder organische Füllstoffe, Flammschutzmittel, Verstärkungsmittel und Weichmacher, Metalldeaktivatoren. In einer bevorzugten Ausführungsform fallen unter die Komponente (e) auch Hydrolyseschutzmittel wie beispielsweise polymere und niedermolekulare Carbodiimide. Besonders bevorzugt enthält das thermoplastische Polyurethan in den erfindungsgemäßen Materialien Melamincyanurat, das als Flammschutzmittel wirkt. Bevorzugt wird Melamincyanurat in einer Menge zwischen 0,1 und 60 Gew.-%, besonders bevorzugt zwischen 5 und 40 Gew.-%, insbesondere zwischen 15 und 25 Gew.-% eingesetzt, jeweils bezogen auf das Gesamtgewicht des TPU. Bevorzugt enthält das thermoplastische Polyurethan Triazol und/oder Triazolderivat und Antioxidantien in einer Menge von 0,1 bis 5 Gew.-% bezogen auf das Gesamtgewicht des thermoplastischen Polyurethans. Als Antioxidantien sind im allgemeinen Stoffe geeignet, welche unerwünschte oxidative Prozesse im zu schützenden Kunststoff hemmen oder verhindern. Im allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für Sterisch gehinderte Phenole finden sich in Plastics Additive Handbook, 5th edition, H. Zweifel, ed, Hanser Publishers, München, 2001 ([1]), S. 98 - 107 und S. 116 - 121. Beispiele für Aromatische Amine finden sich in [1] S. 107 - 108. Beispiele für Thiosynergisten sind gegeben in [1], S. 104 - 105 und S. 112 - 113. Beispiele für Phosphite finden sich in [1], S. 109 - 112. Beispiele für Hindered Amine Light Stabilizer sind gegeben in [1], S. 123 - 136. Zur Verwendung eignen sich bevorzugt phenolische Antioxidantien. In einer bevorzugten Ausführungsform weisen die Antioxidantien, insbesondere die phenolischen Antioxidantien, eine Molmasse von größer 350 g/mol, besonders bevorzugt von größer 700 g/mol und einer maximalen Molmasse < 10000 g/mol bevorzugt < 3000 g/mol auf. Ferner besitzen sie bevorzugt einen Schmelzpunkt von kleiner 180 °C. Weiterhin werden bevorzugt Antioxidantien verwendet, die amorph oder flüssig sind. Ebenfalls können als Komponente (i) auch Gemische von zwei oder mehr Antioxidantien verwendet werden.

Neben den genannten Komponenten a), b) und c) und gegebenenfalls d) und e) können auch Kettenregler, üblicherweise mit einem Molekulargewicht von 31 bis 3000, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente (c).

Alle in dieser Schrift genannten Molekulargewichte weisen die Einheit [g/mol] auf.

Zur Einstellung der Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Bevorzugt wird als thermoplastisches Polyurethan mit einer Härte zwischen 50 Shore A und 90 Shore D, je nach Aufgabe innerhalb der Konstruktion eingesetzt. In hydrolyseempflindlichen Anwendungen sind Ether-TPU zu bevorzugen. In besonders lichtexponierten Anwendungen sind aliphatische TPU zu bevorzugen. Das thermoplastische Polyurethan weist bevorzugt ein zahlenmittleres Molekulargewicht von mindestens 40000 g/mol, besonders bevorzugt mindestens 80000 g/mol, insbesondere mindestens 120000 g/mol auf.

Aufgrund ihrer besonders guten Haftung sind TPU gemäß der WO 03/014179 bevorzugt. Die nachfolgenden Ausführungen bis zu den Beispielen beziehen sich auf diese besonders bevorzugten TPU. Diese TPU haften besonders gut, da die Verarbeitungstemperaturen höher sind als bei anderen "klassischen" TPU mit vergleichbaren Härten und sich bei diesen Bedingungen die besten Haftfestigkeiten erzielen lassen. Diese besonders bevorzugten TPU sind bevorzugt erhältlich durch Umsetzung von (a) Isocyanaten mit (b1) Polyesterdiolen mit einem Schmelzpunkt größer 150 °C, (b2) Polyetherdiolen und/oder Polyesterdiolen jeweils mit einem Schmelzpunkt kleiner 150 °C und einem Molekulargewicht von 501 bis 8000 g/mol sowie gegebenenfalls (c) Diolen mit einem Molekulargewicht von 62 g/mol bis 500 g/mol. Besonders bevorzugt sind dabei thermoplastische Polyurethane, bei denen das Molverhältnis von den Diolen (c) mit einem Molekulargewicht von 62 g/mol bis 500 g/mol zur Komponente (b2) kleiner 0,2, besonders bevorzugt 0,1 bis 0,01, beträgt. Besonders bevorzugt sind thermoplastische Polyurethane, bei denen die Polyesterdiole (b1), die bevorzugt ein Molekulargewicht von 1000 g/mol bis 5000 g/mol besitzen, die folgende Struktureinheit (I) aufweisen: 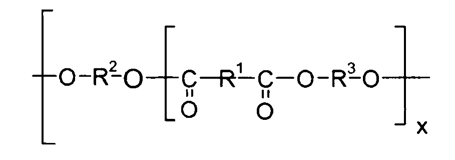 mit den folgenden Bedeutungen für R1, R2, R3 und X:
- R1:: Kohlenstoffgerüst mit 2 bis 15 Kohlenstoffatomen, bevorzugt eine Alkylengruppe mit 2 bis 15 Kohlenstoffatomen und/oder ein bivalenter aromatischer Rest mit 6 bis 15 Kohlenstoffatomen, besonders bevorzugt mit 6 bis 12 Kohlenstoffatomen
- R2:: gegebenenfalls verzweigtkettige Alkylengruppe mit 2 bis 8 Kohlenstoffatomen, bevorzugt 2 bis 6, besondere bevorzugt 2 bis 4 Kohlenstoffatomen, insbesondere -CH₂-CH₂ und/oder -CH₂-CH₂-CH₂-CH₂-,
- R3:: gegebenenfalls verzweigtkettige Alkylengruppe mit 2 bis 8 Kohlenstoffatomen, bevorzugt 2 bis 6, besonders bevorzugt 2 bis 4 Kohlenstoffatomen, insbesondere -CH₂-CH₂- und/oder -CH₂CH₂-CH₂-CH₂-,
- X:: eine ganze Zahl aus dem Bereich 5 bis 30. Der eingangs dargestellte bevorzugte Schmelzpunkt und/oder das bevorzugte Molekulargewicht beziehen sich bei dieser bevorzugten Ausführungsform auf die dargestellte Struktureinheit (I).

Unter dem Ausdruck "Schmelzpunkt" ist in dieser Schrift das Maximum des Schmelzpeaks einer Aufheizkurve zu verstehen, die mit einem handelsüblichen DSC-Gerät (z. B. DSC 7 / Fa. Perkin-Elmer) gemessen wurde.

Die in dieser Schrift angegebenen Molekulargewichte stellen die zahlenmittleren Molekulargewichte dar in [g/mol].

Diese besonders bevorzugten thermoplastischen Polyurethane können bevorzugt dadurch hergestellt werden, dass man einen, bevorzugt hochmolekularen, bevorzugt teilkristallinen, thermoplastischen Polyester mit einem Diol (c) umsetzt und anschließend das Umsetzungsprodukt aus (i) enthaltend (b1) Polyesterdiol mit einem Schmelzpunkt größer 150 °C sowie gegebenenfalls (c) Diol zusammen mit (b2) Polyetherdiolen und/oder Polyesterdiolen jeweils mit einem Schmelzpunkt kleiner 150 °C und einem Molekulargewicht von 501 bis 8000 g/mol sowie gegebenenfalls weiteren (c) Diolen mit einem Molekulargewicht von 62 bis 500 g/mol mit (a) Isocyanat gegebenenfalls in Gegenwart von (d) Katalysatoren und/oder (e) Hilfsmitteln umsetzt.

Bevorzugt ist bei der Umsetzung (ii) das Molverhältnis von den Diolen (c) mit einem Molekulargewicht von 62 g/mol bis 500 g/mol zu der Komponente (b2) kleiner 0,2, bevorzugt 0,1 bis 0,01.

Während durch den Schritt (i) die Hartphasen durch den im Schritt (i) eingesetzten Polyester für das Endprodukt zur Verfügung gestellt werden, erfolgt durch den Einsatz der Komponente (b2) im Schritt (ii) der Aufbau der Weichphasen. Die bevorzugte technische Lehre besteht darin, dass Polyester mit einer ausgeprägten, gut kristallisierenden Hartphasenstruktur bevorzugt in einem Reaktionsextruder aufgeschmolzen und mit einem niedermolekularen Diol zunächst abgebaut werden zu kürzeren Polyestern mit freien Hydroxylendgruppen. Hierbei bleibt die ursprüngliche hohe Kristallisationstendenz des Polyesters erhalten und kann anschließend genutzt werden, um bei rasch verlaufender Umsetzung TPU mit den vorteilhaften Eigenschaften zu erhalten, als da sind hohe Zugfestigkeitswerte, niedrige Abriebswerte und wegen des hohen und engen Schmelzbereichs hohe Wärmeformbeständigkeiten und niedrige Druckverformungsreste. Somit werden nach dem bevorzugten Verfahren bevorzugt hochmolekulare, teilkristalline, thermoplastische Polyester mit niedermolekularen Diolen (c) unter geeigneten Bedingungen in kurzer Reaktionszeit abgebaut zu schnell kristallisierenden Poly-Esterdiolen (b1), die ihrerseits dann mit anderen Polyesterdiolen und/oder Polyetherdiolen und Diisocyanaten in hochmolekulare Polymerketten eingebunden werden.

Dabei weist der eingesetzte thermoplastische Polyester, d. h. vor der Umsetzung (i) mit dem Diol (c), bevorzugt ein Molekulargewicht von 15000 g/mol bis 40000 g/mol sowie bevorzugt einen Schmelzpunkt von größer 160 °C, besonders bevorzugt von 170 °C bis 260 °C auf.

Als Ausgangsprodukt, d. h. als Polyester, der in dem Schritt (i) bevorzugt in geschmolzenem Zustand besonders bevorzugt bei einer Temperatur von 230 °C bis 280 °C bevorzugt für eine Dauer von 0,1 min bis 4 min, besonders bevorzugt 0,3 min bis 1 min mit dem oder den Diol(en) (c) umgesetzt wird, können allgemein bekannte, bevorzugt hochmolekulare, bevorzugt teilkristalline, thermoplastische Polyester, beispielsweise in granulierter Form, eingesetzt werden. Geeignete Polyester basieren beispielsweise auf aliphatischen, cycloaliphatischen, araliphatischen und/oder aromatischen Dicarbonsäuren, beispielsweise Milchsäure und/oder Terephthalsäure sowie aliphatischen, cycloaliphatischen, araliphatischen und/oder aromatischen Dialkoholen, beispielsweise Ethandiol-1,2, Butandiol-1,4 und/oder Hexandiol-1,6.

Besonders bevorzugt werden als Polyester eingesetzt: Poly-L-Milchsäure und/oder Polyalkylenterephthalat, beispielsweise Polyethylenterephthalat, Polypropylenterephthalat, Polybutylenterephthalat, insbesondere Polybutylenterephthalat.

Die Herstellung dieser Ester aus den genannten Ausgangsstoffen ist dem Fachmann allgemein bekannt und vielfach beschrieben. Geeignete Polyester sind zudem kommerziell erhältlich

Den thermoplastischen Polyester schmilzt man bevorzugt bei einer Temperatur von 180 °C bis 270 °C auf. Die Umsetzung (i) mit dem Diol (c) führt man bevorzugt bei einer Temperatur von 230 °C bis 280 °C, bevorzugt 240 °C bis 280 °C durch.

Als Diol (c) können in dem Schritt (i) zur Umsetzung mit dem thermoplastischen Polyester und gegebenenfalls im Schritt (ii) allgemein bekannte Diole mit einem Molekulargewicht von 62 bis 500 g/mol eingesetzt werden, beispielsweise die an späterer Stelle genannten, z. B. Ethylenglykol, 1,3-Propandiol, 1,4-Butandiol, 1,5-Pentandiol, 1,6-Hexandiol, Heptandiol, Oktandiol, bevorzugt Butan-1,4-diol und/oder Ethan-1,2-diol. Das Gewichtsverhältnis vom thermoplastischen Polyester zum Diol (c) in dem Schritt (i) beträgt üblicherweise 100 : 1,0 bis 100 : 10, bevorzugt 100 : 1,5 bis 100 : 8,0.

Die Umsetzung des thermoplastischen Polyesters mit dem Diol (c) in dem Umsetzungsschritt (i) wird bevorzugt in Gegenwart von üblichen Katalysatoren, beispielsweise solchen, die an späterer Stelle beschrieben werden, durchgeführt. Bevorzugt werden für diese Umsetzung Katalysatoren auf der Basis von Metallen eingesetzt. Bevorzugt führt man die Umsetzung im Schritt (i) in Gegenwart von 0,1 bis 2 Gew.-% Katalysatoren, bezogen auf das Gewicht des Diols (c), durch. Die Umsetzung in Gegenwart derartiger Katalysatoren ist vorteilhaft, um die Reaktion in der zur Verfügung stehenden kurzen Verweilzeit in dem Reaktor, beispielsweise einem Reaktionsextruder durchführen zu können.

Als Katalysatoren kommen beispielsweise für diesen Umsetzungsschritt (i) in Frage: Tetrabutylorthotitanat und/oder Zinn-(II)-Dioctoat, bevorzugt Zinn-dioctoat.

Das Polyesterdiol (b1) als Umsetzungsprodukt aus (i) weist bevorzugt ein Molekulargewicht von 1000 g/mol bis 5000 g/mol auf. Der Schmelzpunkt des Polyesterdiols als Umsetzungsprodukt aus (i) beträgt bevorzugt 150 °C bis 260 °C, insbesondere 165 °C bis 245 °C, d. h. dass das Umsetzungsprodukt des thermoplastischen Polyesters mit dem Diol (c) im Schritt (i) Verbindungen mit dem genannten Schmelzpunkt enthält, die in dem anschließenden Schritt (ii) eingesetzt werden. Durch die Umsetzung des thermoplastischen Polyesters mit dem Diol (c) in dem Schritt (i) wird die Polymerkette des Polyesters durch das Diol (c) durch Umesterung gespalten. Das Umsetzungsprodukt des TPU weist deshalb freie Hydroxylendgruppen auf und wird bevorzugt in dem weiteren Schritt (ii) zu dem eigentlichen Produkt, dem TPU, weiterverarbeitet.

Die Umsetzung des Reaktionsproduktes aus dem Schritt (i) in dem Schritt (ii) erfolgt bevorzugt durch Zugabe von a) Isocyanat (a) sowie (b2) Polyetherdiolen und/oder Polyesterdiolen jeweils mit einem Schmelzpunkt kleiner 150 °C und einem Molekulargewicht von 501 bis 8000 g/mol sowie gegebenenfalls weiteren Diolen (c) mit einem Molekulargewicht von 62 bis 500, (d) Katalysatoren und/oder (e) Hilfsstoffe zu dem Reaktionsprodukt aus (i). Die Umsetzung von dem Reaktionsprodukt mit dem Isocyanat erfolgt über die in dem Schritt (i) entstandenen Hydroxylendgruppen. Die Umsetzung in dem Schritt (ii) erfolgt bevorzugt bei einer Temperatur von 190 °C bis 250 °C bevorzugt für eine Dauer von 0,5 bis 5 min, besonders bevorzugt 0,5 bis 2 min, bevorzugt in einem Reaktionsextruder, besonders bevorzugt in dem gleichen Reaktionsextruder, in dem auch der Schritt (i) durchgeführt wurde. Beispielsweise kann die Umsetzung des Schrittes (i) in den ersten Gehäusen eines üblichen Reaktionsextruders erfolgen und an späterer Stelle, d. h. späteren Gehäusen, nach der Zugabe der Komponenten (a) und (b2), die entsprechende Umsetzung des Schrittes (ii) durchgeführt werden. Beispielsweise können die ersten 30 bis 50 % der Länge des Reaktionsextruders für den Schritt (i) verwendet und die restlichen 50 bis 70 % für den Schritt (ii) eingesetzt werden.

Die Umsetzung in dem Schritt (ii) erfolgt bevorzugt bei einem Überschuss der Isocyanatgruppen zu den gegenüber Isocyanaten reaktiven Gruppen. Bevorzugt beträgt in der Umsetzung (ii) das Verhältnis der Isocyanatgruppen der zu den Hydroxylgruppen 1 : 1 bis 1,2 : 1, besonders bevorzugt 1,02 : 1 bis 1,2 . 1.

Bevorzugt führt man die Umsetzungen (i) und (ii) in einem allgemein bekannten Reaktionsextruder durch. Derartige Reaktionsextruder sind beispielhaft in den Firmenschriften von Werner & Pfleiderer oder in der DE-A 2 302 564 beschrieben.

Bevorzugt wird das bevorzugte Verfahren derart durchgeführt, dass man in das erste Gehäuse eines Reaktionsextruders mindestens einen thermoplastischen Polyester, z. B. Polybutylenterephthalat, dosiert und bei Temperaturen bevorzugt zwischen 180 °C bis 270 °C, bevorzugt 240 °C bis 270 °C aufschmilzt, in ein nachfolgendes Gehäuse ein Diol (c), z. B. Butandiol, und bevorzugt einen Umesterungskatalysator zugibt, bei Temperaturen zwischen 240 °C bis 280 °C den Polyester durch das Diol (c) zu Polyesteroligomeren mit Hydroxylendgruppen und Molekulargewichten zwischen 1000 bis 5000 g/mol abbaut, in einem nachfolgenden Gehäuse Isocyanat (a) und (b2) gegenüber Isocyanaten reaktiven Verbindungen mit einem Molekulargewicht von 501 bis 8000 g/mol sowie gegebenenfalls (c) Diole mit einem Molekulargewicht von 62 bis 500, (d) Katalysatoren und/oder (e) Hilfsstoffe zudosiert und anschließend bei Temperaturen von 190 °C bis 250 °C den Aufbau zu den bevorzugten thermoplastischen Polyurethanen durchführt.

Bevorzugt werden im Schritt (ii) mit Ausnahme der im Umsetzungsprodukt von (i) enthaltenen (c) Diole mit einem Molekulargewicht von 62 bis 500 keine (c) Diole mit einem Molekulargewicht von 62 bis 500 zugeführt.

Der Reaktionsextruder weist in dem Bereich, in dem der thermoplastische Polyester geschmolzen wird, bevorzugt neutrale und/oder rückwärtsfördernde Knetblöcke und Rückförderelemente auf sowie in dem Bereich, in dem der thermoplastische Polyester mit dem Diol umgesetzt wird, bevorzugt Schneckenmischelemente, Zahnscheiben und/oder Zahnmischelemente in Kombination mit Rückförderelementen.

Nach dem Reaktionsextruder wird die klare Schmelze üblicherweise mittels einer Zahnradpumpe einer Unterwassergranulierung zugeführt und granuliert.

Die besonders bevorzugten thermoplastischen Polyurethane zeigen optisch klare, einphasige Schmelzen, die rasch erstarren und infolge der teilkristallinen Polyesterhartphase schwach opake bis weiß-undurchsichtige Formkörper bilden. Das rasche Erstarrungsverhalten ist ein entscheidender Vorteil zu bekannten Rezepturen und Herstellverfahren für thermoplastische Polyurethane. Das rasche Erstarrungsverhalten ist so ausgeprägt, dass selbst Produkte mit Härten 50 bis 60 Shore A im Spritzguß mit Zykluszeiten kleiner 35 s verarbeitbar sind. Auch in der Extrusion, z. B. bei der Blasfolienherstellung, treten keinerlei TPU-typische Probleme wie Verkleben oder Verblocken der Folien oder Schläuche auf.

Der Anteil des thermoplastischen Polyesters in dem Endprodukt, d. h. dem thermoplastischen Polyurethan, beträgt bevorzugt 5 bis 75 Gew.-%. Besonders bevorzugt stellen die bevorzugten thermoplastischen Polyurethane Produkte der Reaktion eines Gemisches enthaltend 10 bis 70 Gew.-% des Umsetzungsproduktes aus (i), 10 bis 80 Gew.-% (b2) und 10 bis 20 Gew.-% (a) dar, wobei die Gewichtsangaben auf das Gesamtgewicht des Gemisches enthaltend (a), (b2), (d), (e) und das Umsetzungsprodukt aus (i) bezogen sind.

Die bevorzugten thermoplastischen Polyurethane weisen bevorzugt eine Härte von Shore 45 A bis Shore 78 D, besonders bevorzugt 50 A bis 75 D auf.

Bevorzugt weisen die bevorzugten thermoplastischen Polyurethane die folgende Struktureinheit (II) auf: 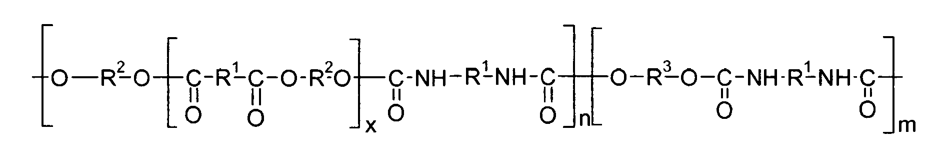 mit den folgenden Bedeutungen für R1, R2, R3 und X:
- R1:: Kohlenstoffgerüst mit 2 bis 15 Kohlenstoffatomen, bevorzugt eine Alkylengruppe mit 2 bis 15 Kohlenstoffatomen und/oder ein aromatischer Rest mit 6 bis 15 Kohlenstoffatomen,
- R2:: gegebenenfalls verzweigtkettige Alkylengruppe mit 2 bis 8 Kohlenstoffatomen, bevorzugt 2 bis 6, besondere bevorzugt 2 bis 4 Kohlenstoffatomen, insbesondere -CH2-CH2- und/oder -CH2-CH2-CH2-CH2-,
- R3:: Rest, der sich durch den Einsatz von Polyetherdiolen und/oder Polyesterdiolen mit jeweils Molekulargewichten zwischen 501 g/mol und 8000 g/mol als (b2) oder durch den Einsatz von Alkandiolen mit 2 bis 12 Kohlenstoffatomen für die Umsetzung mit Diisocyanaten ergibt,
- X:: eine ganze Zahl aus dem Bereich 5 bis 30,
- n, m:: eine ganze Zahl aus dem Bereich 5 bis 20.

Der Rest R1 wird durch das eingesetzte Isocyanat definiert, der Rest R2 durch das Umsetzungsprodukt des thermoplastischen Polyesters mit dem Diol (c) in (i) und der Rest R3 durch die Ausgangskomponenten (b2) und gegebenenfalls (c) bei der Herstellung der TPU.

Die Abmessungen von Innenbuchse, Lagerelementen und Außenbuchse können weitgehend beliebig gewählt werden und sich bevorzugt nach den Abmessungen bekannter Rundlager richten. Die Länge des Rundlagers und der Gesamtdurchmesser sowie der Durchmesser des Hohlraums der Innenbuchse (i) können sich nach dem Einsatz und den zu lagernden Objekten richten. Die Wahl geeigneter Abmessungen ist dem Fachmann geläufig. Die bevorzugten Abmessungen der Innenbuchse wurden eingangs dargestellt.

Die Innenbuchse (i) weist bevorzugt eine Höhe zwischen 30 mm und 100 mm, einen äußeren Durchmesser zwischen 20 mm und 80 mm sowie bevorzugt einen Durchmesser des Hohlraums zwischen 8 mm und 20 mm auf.

Als Objekte, die mittels des Rundlagers insbesondere mit der Karosserie eines Automobils oder eines Lastkraftwagens gelagert werden sollen, kommen beispielsweise alle Arten von Aggregaten, Fahrschemeln, Lenkern, Getrieben und/oder Anbauteilen, bevorzugt Aggregate, Lenker und/oder Getriebe, besonders bevorzugt Hinterachsgetriebe in Frage.

Diese mit dem bevorzugt dämpfend wirkenden Rundlager zu lagernden Teile können beispielsweise dadurch mit den Rundlager befestigt werden, dass man sie mit Hilfe Schrauben-, Bolzen, Stift-, Niet- oder anderen form- oder kraftschlüssigen Verbindungen, bevorzugt Schrauben-, Bolzen, Stift-, Niet-Verbindungen befestigt, bevorzugt mit Hilfe der hohlen Innenbuchse.

Bevorzugt wird man entsprechend an der Innenbuchse (i) Aggregate, Lenker und/oder Getriebe, besonders bevorzugt Hinterachsgetriebe befestigen und somit bevorzugt mit der Karosserie eines Automobils oder eines Lastkraftwagens bevorzugt schwingungsdämpfend verbinden. Ebenso ist es denkbar, dass diese Lager beispielsweise in die Lagerschilde von Getrieben, Aggregaten eingebracht werden, die dann mit der Karosserie verbunden werden.

## Patentansprüche

1. Verfahren zur Herstellung von Lagern enthaltend (i) Außenbuchse, (ii) Lagerelement auf der Basis von zelligen Polyisocyanat-Polyadditionsprodukten und (iii) hohle Innenbuchse, **dadurch gekennzeichnet, dass** man die Außenbuchse mittels Spritzguss von thermoplastischem Kunststoff herstellt und haftend mit dem Lagerelement verbindet.

2. Verfahren gemäß Anspruch 1, **dadurch gekennzeichnet, dass** man thermoplastischen Kunststoff Glasfaser verstärktes thermoplastischen Polyurethan einsetzt.

3. Verfahren gemäß Anspruch 1, **dadurch gekennzeichnet, dass** man das Lagerelement (ii) in Kontakt mit der Innenbuchse herstellt, haftend verbindet und anschließend die Außenbuchse (i) in der Form einer Spritzgussapparatur mittels Spritzguss herstellt.

4. Verfahren gemäß Anspruch 1, **dadurch gekennzeichnet, dass** man die Innenbuchse (iii) in dem Lagerelement (ii) platziert und haftend verbindet und anschließend die Außenbuchse (i) in der Form einer Spritzgussapparatur mittels Spritzguss herstellt.

5. Verfahren gemäß Anspruch 1, **dadurch gekennzeichnet, dass** man die Oberfläche des Lagerelementes (ii) plasmabehandelt und anschließend den thermoplastischen Kunststoff der Außenbuchse (i) an die plasmabehandelte Oberfläche des Lagerelementes anspritzt.

6. Verfahren gemäß Anspruch 1, **dadurch gekennzeichnet, dass** man die Oberfläche des Lagerelementes (ii) mechanisch vorbehandelt und anschließend den thermoplastischen Kunststoff der Außenbuchse (i) an die vorbehandelte Oberfläche des Lagerelementes anspritzt.

7. Verfahren gemäß Anspruch 1, **dadurch gekennzeichnet, dass** das Lagerelement (ii) haftend mit einem weiteren elastischen Lagerelement (iv) verbunden ist.

8. Verfahren gemäß Anspruch 7, **dadurch gekennzeichnet, dass** das Lagerelement (iv) zwischen der Außenbuchse (i) und dem Lagerelement (ii) platziert ist, axial über die gesamte Länge des Lagerelementes (ii) reicht und das Lagerelement (ii) nicht vollständig umfasst.

9. Verfahren gemäß Anspruch 7, **dadurch gekennzeichnet, dass** das Lagerelement (iv) zwischen der Innenbuchse (iii) und dem Lagerelement (ii) platziert ist, axial.
über die gesamte Länge des Lagerelementes (ii) reicht und die Innenbuchse (iii) nicht vollständig umfasst wird.

10. Verfahren gemäß Anspruch 8 oder 9, **dadurch gekennzeichnet, dass** das Lagerelement (iv) in mindestens einer Nut des Lagerelementes (ii) angeordnet ist.

11. Verfahren gemäß Anspruch 7, **dadurch gekennzeichnet, dass** man das Lagerelement (iv) mittels Spritzguss in Kontakt mit dem Lagerelement (ii) herstellt.

12. Verfahren gemäß Anspruch 7, **dadurch gekennzeichnet, dass** man das Lagerelement (iv) als Giesselastomer in Kontakt mit dem Lagerelement (ii) herstellt.

13. Verfahren gemäß Anspruch 1, **dadurch gekennzeichnet, dass** die Außenbuchse eine Dicke zwischen 1 mm und 10 mm aufweist.

14. Lager erhältlich durch ein Verfahren gemäß einem der Ansprüche 1 bis 13.

## Claims

1. A method for producing bearings comprising (i) an outer bushing, (ii) a bearing element based on cellular polyisocyanate polyadducts and (iii) a hollow inner bushing, wherein the outer bushing is produced by injection molding a thermoplastic and adhesively bonding it to the bearing element.

2. The method according to claim 1, wherein the thermoplastic used is a glass fiber-reinforced thermoplastic polyurethane.

3. The method according to claim 1, wherein the bearing element (ii) is produced in contact with the inner bushing and adhesively bonded to it, and the outer bushing (i) is then produced in the mold of an injection molding apparatus by means of injection molding.

4. The method according to claim 1, wherein the inner bushing (iii) is placed in the bearing element (ii) and adhesively bonded to it, and the outer bushing (i) is then produced in the mold of an injection molding apparatus by means of injection molding.

5. The method according to claim 1, wherein the surface of the bearing element (ii) is plasma-treated and the thermoplastic of the outer bushing (i) is then injected onto the plasma-treated surface of the bearing element.

6. The method according to claim 1, wherein the surface of the bearing element (ii) is mechanically pretreated and the thermoplastic of the outer bushing (i) is then injected onto the pretreated surface of the bearing element.

7. The method according to claim 1, wherein the bearing element (ii) is adhesively bonded to a further resilient bearing element (iv).

8. The method according to claim 7, wherein the bearing element (iv) is placed between the outer bushing (i) and the bearing element (ii), extends axially over the total length of the bearing element (ii) and does not completely surround the bearing element (ii).

9. The method according to claim 7, wherein the bearing element (iv) is placed between the inner bushing (iii) and the bearing element (ii), extends axially over the total length of the bearing element (ii) and does not completely surround the inner bushing (iii).

10. The method according to claim 8 or 9, wherein the bearing element (iv) is arranged in at least one groove of the bearing element (ii).

11. The method according to claim 7, wherein the bearing element (iv) is produced by means of injection molding in contact with the bearing element (ii).

12. The method according to claim 7, wherein the bearing element (iv) is produced as a cast elastomer in contact with the bearing element (ii).

13. The method according to claim 1, wherein the outer bushing has a thickness of from 1 mm to 10 mm.

14. A bearing obtainable by a method according to any of claims 1 to 13.

## Revendications

1. Procédé pour la fabrication de paliers comprenant un coussinet extérieur (i), un élément de palier (ii) à base de produits de polyaddition de polyisocyanate cellulaires et un coussinet intérieur creux (iii), **caractérisé en ce que** le coussinet extérieur est fabriqué grâce à un moulage par injection d'une matière thermoplastique et est relié de manière adhésive à l'élément de palier.

2. Procédé selon la revendication 1, **caractérisé en ce que** l'on utilise du polyuréthane thermoplastique renforcé par des fibres de verre comme matière thermoplastique.

3. Procédé selon la revendication 1, **caractérisé en ce que** l'on fabrique l'élément de palier (ii) en contact avec le coussinet intérieur, on le relie de manière adhésive et l'on fabrique ensuite le coussinet extérieur (i) dans le moule d'un appareil de moulage par injection grâce à un moulage par injection.

4. Procédé selon la revendication 1, **caractérisé en ce que** l'on place le coussinet intérieur (iii) dans l'élément de palier (ii) et on le relie de manière adhésive et l'on fabrique ensuite le coussinet extérieur (i) dans le moule d'un appareil de moulage par injection grâce à un moulage par injection.

5. Procédé selon la revendication 1, **caractérisé en ce que** l'on traite au plasma la surface de l'élément de palier (ii) et que l'on surmoule ensuite la matière thermoplastique du coussinet extérieur (i) sur la surface traitée au plasma de l'élément de palier.

6. Procédé selon la revendication 1, **caractérisé en ce que** l'on soumet la surface de l'élément de palier (ii) à un prétraitement mécanique et que l'on surmoule ensuite la matière thermoplastique du coussinet extérieur (i) sur la surface prétraitée de l'élément de palier.

7. Procédé selon la revendication 1, **caractérisé en ce que** l'élément de palier (ii) est relié de manière adhésive à un autre élément de palier élastique (iv).

8. Procédé selon la revendication 7, **caractérisé en ce que** l'élément de palier (iv) est placé entre le coussinet extérieur (i) et l'élément de palier (ii), s'étend axialement sur toute la longueur de l'élément de palier (ii) et n'englobe pas entièrement l'élément de palier (ii).

9. Procédé selon la revendication 7, **caractérisé en ce que** l'élément de palier (iv) est placé entre le coussinet intérieur (iii) et l'élément de palier (ii), s'étend axialement sur toute la longueur de l'élément de palier (ii) et que le coussinet intérieur (iii) n'est pas entièrement englobé.

10. Procédé selon la revendication 8 ou 9, **caractérisé en ce que** l'élément de palier (iv) est disposé dans au moins une rainure de l'élément de palier (ii).

11. Procédé selon la revendication 7, **caractérisé en ce que** l'on fabrique l'élément de palier (iv) grâce à un moulage par injection en contact avec l'élément de palier (ii).

12. Procédé selon la revendication 7, **caractérisé en ce que** l'on fabrique l'élément de palier (iv) en tant qu'élastomère de moulage en contact avec l'élément de palier (ii).

13. Procédé selon la revendication 1, **caractérisé en ce que** le coussinet extérieur présente une épaisseur comprise entre 1 mm et 10 mm.

14. Palier pouvant être obtenu grâce à un procédé selon l'une des revendications 1 à 13.
